(19) **Europäisches Patentamt**

**European Patent Office**

**Office européen des brevets**

(11) **EP 1 054 789 B1**

(12) **EUROPÄISCHE PATENTSCHRIFT**

(45) Veröffentlichungstag und Bekanntmachung des Hinweises auf die Patenterteilung:
**17.03.2004 Patentblatt 2004/12**

(21) Anmeldenummer: **99966857.7**

(22) Anmeldetag: **13.12.1999**

(51) Int Cl.$^7$: **B60R 16/02**

(86) Internationale Anmeldenummer:
**PCT/DE1999/003979**

(87) Internationale Veröffentlichungsnummer:
**WO 2000/035715 (22.06.2000 Gazette 2000/25)**

(54) **VERFAHREN ZUR EIN- BZW. ABSCHALTUNG VON VERBRAUCHERN**

METHOD FOR SWITCHING CONSUMERS ON OR OFF

PROCEDE DE MISE SOUS TENSION OU HORS TENSION DE CONSOMMATEURS

(84) Benannte Vertragsstaaten:
**DE FR GB IT SE**

(30) Priorität: **15.12.1998 DE 19857917**

(43) Veröffentlichungstag der Anmeldung:
**29.11.2000 Patentblatt 2000/48**

(73) Patentinhaber: **ROBERT BOSCH GMBH**
**70442 Stuttgart (DE)**

(72) Erfinder:
• **SCHOETTLE, Richard**
**D-75248 Oelbronn (DE)**
• **SCHMUCKER, Clemens**
**D-70806 Kornwestheim (DE)**
• **BAUMANN, Torsten**
**D-74252 Massenbachhausen (DE)**
• **BOLENZ, Klaus**
**D-71701 Schwieberdingen (DE)**

(56) Entgegenhaltungen:
**EP-A- 0 601 300        EP-A- 0 884 819**
**DE-C- 3 936 638        US-A- 5 426 589**

**Beschreibung**

Stand der Technik

Die Erfindung betrifft ein Verfahren gemäß dem Oberbegriff von Anspruch 1.

Ein derartiges Verfahren ist aus EP 0 601 300 A1 bekannt.

Im elektrischen Bordnetz von Kraftfahrzeugen werden die elektrischen Verbraucher in verschiedene Klassen eingeteilt. Es gibt Verbraucher, die für den sicheren Betrieb und die Sicherheit des Fahrzeugs zwingend notwendig sind wie beispielsweise Fahrlicht, Motor- oder sonstige Steuergeräte, Kraftstoffpumpen usw. Diese Verbraucher werden nachfolgend als "Nicht-Steuerbare-Verbraucher" (NSV) bezeichnet.

Weiterhin sind elektrische Verbraucher vorhanden, deren Zu- bzw. Abschalten der Fahrer sofort oder sehr schnell bemerkt, wie z.B. Innenraumgebläse, Radio, Sitzverstellung, Frontscheibenheizung, usw. Diese Verbraucher werden nachfolgend als "Bedingt-Steuerbare-Verbraucher" (BSV) bezeichnet.

Schließlich gibt es Verbraucher, die Speicherverhalten aufweisen, so daß eine Unterbrechung der Energiezufuhr bzw. die Abschaltung der sie versorgenden Spannung erst nach einer bestimmten Zeit bemerkt wird. Solche Verbraucher sind beispielsweise eine Sitzheizung, die Heckscheibenheizung, elektrische Zusatzheizungen, der Zigarettenanzünder usw. Diese Verbraucher werden als "Steuerbare-Verbraucher" (SV) bezeichnet. Ziel eines Energiemanagements (EM) ist es, die Steuerbaren-Verbraucher und unter bestimmten Bedingungen die Bedingt-Steuerbaren-Verbraucher BSVs so zu schalten, daß der Batteriezustand günstig ist oder wird. Zusätzlich soll mit Hilfe des Energie-Managements (EM) eine bessere Kopplung von Triebstrang und Bordnetz möglich sein, um beispielsweise Funktionen, wie Triebstrangentlastung durch Generatorentregung beim Beschleunigen, oder eine zusätzlich wirkende Triebstrangbelastung beim Bremsen durch volle Erregung des Generators zu realisieren.

Es ist aus der DE-OS 39 36 638 bereits ein Verfahren bekannt, bei dem die Verbraucher in einem Fahrzeugbordnetz bei Unterschreitung eines bestimmten Ladezustands der Batterie des Fahrzeugs abgeschaltet oder zurückgeschaltet werden, um ein zu starke Entladung der Batterie zu verhindern. Welche oder welcher Verbraucher abgeschaltet werden oder wird, hängt davon ab, zu welcher Gruppe von Verbraucher dieser gehört. Eine solche Gruppe setzt sich beispielsweise aus "Bedingt-Schaltbaren-Verbrauchern" (BSV) und/oder "Schaltbaren-Verbrauchern" (SV) zusammen. Die Gruppe wird dabei immer komplett abgeschaltet oder im Verbrauch reduziert. Es werden dabei mehrere Gruppen definiert, die "BSVs" und/oder "SVs" enthalten. Jede Gruppe besitzt eine die Fahrzeugsicherheit bzw. ihre Wichtigkeit betreffende Priorität. Die Abschaltung oder Rückschaltung der einzelnen Gruppen beginnt bei der Gruppe mit der geringsten Priorität. Führt dies nicht zu Verbesserung des Ladezustands der Batterie werden nachfolgend weitere Gruppen abgeschaltet oder zurückgeschaltet, bis der Ladezustand der Batterie ein bestimmtes Niveau erreicht.

Weiterhin ist aus der EP 0 601 300 B1 ein Verfahren bekannt, bei dem das Rückschalten oder Abschalten der elektrischen Verbraucher in einem Fahrzeugbordnetz vom Fahrzustand abhängig ist. Die Fahrzustände betreffen die Fahrzeuggeschwindigkeit und den Stillstand einerseits und den Betriebszustand des Verbrennungsmotors andererseits. Auf der Basis der von Sensoren gelieferten Signale bzw. Informationen kann von einem Steuergerät des Fahrzeugs je nach vorliegendem Fahrzeugzustand bestimmt werden, welche Typen von Verbrauchern einzeln oder gruppenweise, gleichzeitig oder nacheinander entsprechend einer vorgegebenen Reihenfolge, ab- oder zurückgeschaltet werden sollen.

Bei den oben beschriebenen Verfahren wird nur die Energieeinsparung und die Aufrecherhaltung der Betriebs- und Fahrzeugsicherheit berücksichtigt. Die Wahrnehmbarkeit der Betriebszustände, z.B. nachlassende Heizleistung der Sitzheizung oder anderer ab- oder rückzuschaltenden Verbraucher bleibt dabei unbeachtet, weil die Verbraucher nach einer unveränderlichen vorgegebenen Strategie geschaltet werden und nicht nach ihrem Zustand.

Aufgabe der Erfindung

Die Aufgabe der Erfindung besteht darin, die Schaltstrategie bzw. die Priorisierung der Verbraucher auch während des Betriebes so anzupassen, daß die Wahrmehmbarkeit der durch die Umschaltung hervorgerufenen Betriebszustände mitberücksichtigt wird und daß eine individuelle Anpassung an vorgebbare Kriterien erfolgt und somit die Nachteile des Standes der Technik vermieden werden werden. Gelöst wird diese Aufgabe durch ein Verfahren mit den Merkmalen des Anspruchs 1.

Kern und Vorteile der Erfindung

Das erfindungsgemäße Verfahren mit den Merkmalen des Anspruchs 1 hat den Vorteil, daß die Auswirkungen auf den Komfort, die durch das Energiemanagement unter gewissen Betriebsbedingungen verursacht werden können, in ihrer Wahrnehmbarkeit verringert oder gar ganz unterdrückt werden und so von den Fahrzeuginsassen nicht bemerkt werden.

Erzielt wird dieser Vorteil, indem eine dynamische Piorisierung der Verbrauchsleistung vorgenommen wird, daß also gegebenenfalls eine Änderung der Priorität unter bestimmten Umständen auch während des Betriebes erfolgen kann. Durch Messung oder Schätzung der Betriebszustände der Verbraucher werden diesen, abhängig vom Betriebszustand Prioritäten zugewiesen. Entsprechend diesen Prioritäten werden zuerst nur Verbraucher der "Schaltbaren-Verbraucher"-Priorität geschalten, und zwar so lange bis das Leistungsdefizit ausgeglichen ist. Erst wenn dies nicht mehr genügt, werden auch Verbraucher der "Bedingt-Schaltbaren - Verbraucher"-Klasse (ab)geschalten. Dadurch ist gewährleistet, daß so lange wie möglich die Schaltung der Verbraucher von den Insassen unbemerkt (komfortneutral) bleibt.

Weitere Vorteile der Erfindung werden durch die in den Unteransprüchen angegebenen Maßnahmen erzielt. Diese Maßnahmen ermöglichen beispielsweise, daß einzelne Verbraucher die zugehörigen Klassen wechseln können, wobei dieser Wechsel vorteilhafterweise zeitabhängig und/oder abhängig von erkannten Betriebszuständen erfolgt. Dabei ist es besonders vorteilhaft, daß einzelne Verbraucher mit einer gewissen Intelligenz ausgestattet werden können, die es ihnen ermöglicht, sich selbst, abhängig von ihrem Betriebszustand in die entsprechende Klasse einzuordnen.

Die Priorisierung der elektrischen Verbraucher kann in vorteilhafter Weise fahrzeugspezifisch und/oder personenspezifisch erfolgen. Dabei können Anhaltspunkte bezüglich des zukünftigen Fahrzyklus berücksichtigt werden und dadurch die Strategie des Energiemanagements beeinflußt werden. Bei entsprechend ausgerüsteten Fahrzeugen mit einem Navigationssysteme können auch die von ihm gelieferten Informationen bei der Festleging der Schaltprioritäten mitberücksichtigt werden. Mit Hilfe lernender Systeme (Memory-Funktionen) kann der Fahrer erkannt werden und das individuelle Fahrverhalten bzw. die individuelle Verbraucheraktivierung bzw. die Komfortwünsche des jeweiligen Fahrers ermittelt und gespeichert werden und bei künftigen Fahrten, insbesonders bei wiederkehrenden Fahrzyklen berücksichtigt werden.

Das Energie-Management erstreckt sich in vorteilhafter Weise nicht nur auf das Schalten von elektrischen Verbrauchern, sondern umfaßt auch mechanische Komponenten, die ein- oder ausgeschaltet werden können, um ein gewünschten Effekt, beispielsweise einer Drehzahlanpassung oder Verbrauchsoptimierung zu erzielen. Das Energie-Management wird vorteilhafterweise mittels eines Steuergerätes, beispielsweise eines Bordnetzsteuergerätes durchgeführt.

Zeichnung

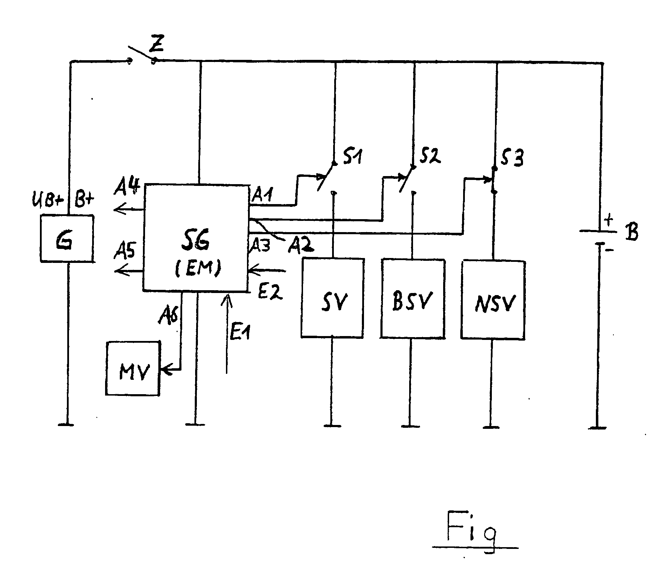

Ein Ausführungsbeispiel der Erfindung ist in der Zeichnung dargestellt und wird in der nachfolgenden Beschreibung näher erläutert. Dabei zeigt die einzige Figur in schematischer Weise die für das Verständnis der Erfindung wesentlichen Komponenten eines Fahzeugbordnetzes.

Beschreibung

Die Erfindung soll nun anhand des in der Figur dargestellten Ausführungsbeispieles erläutert werden. Sie ist jedoch nicht auf ein Fahrzeugbordnetz beschränkt, sonder umfaßt generell systeme, bei denen Verbraucher betriebszustandsabhängig geschaltet werden.

In der Figur sind die für das Verständnis der erfindung erforderlichen Komponenten eines Fahrzeugbordnetzes schematisch dargestellt. Die elektrische Energie für die einzelnen elektrischen Verbraucher liefert der von der nicht dargestellten Brennkraftmaschine angetriebene Generator G Über die Generatorklemme B+ wird die Ausgangsspannung des Generators UB+ bei geschlossenem Zündschalter Z der Batterie B zugeführt.

Von den Verbrauchern sind die "Schaltbaren-Verbraucher" (SV), die "Bedingt-Schaltbaren-Verbraucher" BSV und die "Nicht-Schaltbaren-Verbraucher" NSV dargestellt, die über von einem Steuergerät SG ansteuerbare Schalter S1, S2 und S3 mit der Batterie B verbindbar sind. Der Schalter S3 bleibt dabei bei Betrieb der Brennkraftmaschine geschlossen. Die Schalter S1, S2 und S3 können auch mehrere, einzeln ansteuerbare Einzelschalter umfassen.

Das Steuergerät SG, beispielsweise ein Motorsteuergerät oder ein Bordnetzsteuergerät führt als Energiemanager das Energie-Management EM durch. Dazu werden dem Steuergerät SG über Eingänge E1, E2, ... die erforderlichen Informationen, die die vorliegenden Betriebszustände erkennen lassen, zugeführt. Über Ausgänge A1, A2 und A3 werden die Schalter S1, S2 sowie beim Abschalten gegebenenfalls auch S3 betätigt und die zugehörigen Verbraucher zu- oder abgeschaltet, gemäß den im Steuergerät SG ermittelten Kriterien. Über weitere Ausgänge A4, A5, A6,... führt das Steuergerät weitere Ansteuermaßnahmen durch, die die Motorsteuerung und/oder das Zu- bzw. Abschalten von mechanischen Verbrauchern MV bewirken. Ein solcher mechanischer Verbraucher ist beispielsweise der Klimakompressor, der als "Schaltbarer-Verbraucher" SV anzusehen ist und sowohl in seiner elektrischen Wirkung als Stromverbraucher als auch als mechanischer Verbraucher schaltbar ist und beispielsweise in einer Beschleunigungsphase abgeschaltet wird, um die bremsende Wirkung auszuschalten. Dies gilt auch für den Generator, der bei Beschleunigung zumindest teilweise entregt werden kann.

1. Klasseneinteilung der Verbraucher

Die einzelnen Verbraucher, sowohl elektrische als auch mechanische, werden in einzelne Klassen eingeteilt. In die Klasse "Nicht-Schaltbare-Verbraucher" (NSV), zu denen beispielsweise das Fahrlicht, die Motorsteuerung, bzw. das Steuergerät, die Kraftstoffpumpe und eine mechanische Pumpe der Servolenkung usw. gehören, in die Klasse "Bedingt-Schaltbare-Verbraucher" (BSV), zu denen beispielsweise das Heizgebläse, das Radio, eine Sitzverstellung oder die Frontscheibenheizung usw. gehören und in die Klasse "Schaltbare-Verbraucher" (SV), zu denen beispielsweise eine Sitzheizung, die Heckscheibenheizung, eine elektrische Zusatzheizung, der Zigarettenanzünder und der mechanischer Klimakompressor gehören, eingeteilt.

Die Klasse NSV enthält dabei Verbraucher, die zur sicheren Fahrzeugbewegung zwingend notwendig sind. Diese können nicht ab- oder rückgeschaltet werden. Diese Klasse hat somit die höchste Priorität. Zur Klasse BSV gehören Verbraucher die ab- oder rückgeschaltet werden können, deren Ab- oder Rückschaltung vom Fahrer aber sofort oder sehr schnell bemerkt werden oder deren Funktion die Fahrzeugbedienung verbessern. Sie hat somit geringere Priorität als die NSV-Klasse. Die Klasse SV enthält Verbraucher mit Speicherverhalten, deren Ab- oder Rückschalten durch Unterbrechung der Energiezufuhr nicht unmittelbar vom Fahrer bemerkt wird, sondern erst nach einer vorgebbaren Zeit. Sie hat somit die niedrigste Priorität.

Die Eingruppierung der einzelnen Verbraucher in Prioritätsklassen ist beispielhaft in Tabelle 1 dargestellt. Die Eingruppierung der dargestellten Prioritäten bezieht sich dabei auf den Normalzustand.

2. Wechseln der Klassen

Diese Einteilung der einzelnen Verbraucher in die einzelnen Klassen, wie weiter oben in diesem Abschnitt beispielhaft genannt, bezieht sich, wie bereits erwähnt, auf den Normalzustand. Der Normalzustand liegt vor, wenn ausreichende Energieversorgung bei üblichem Fahrbetrieb gewährleistet ist. Der einzelne Verbraucher kann bei einer Zustandsänderung nicht in eine Klasse mit niedrigerer Priorität gelangen, als die Klasse, in der er sich im Normalzustand befindet, aufweist. Er kann jedoch, in Abhängigkeit von seinem jeweiligen Betriebszustand in eine Klasse höherer Priorität gelangen. In Tabelle 2 ist ein Beispiel dargestellt bei dem ein Prioritätswechsel stattfindet.

Bei dem Beispiel nach Tabelle 2 werden die Sitzheizungen abwechsend abgeschaltet und wieder zugeschaltet und diese abwechselnd von der Klasse SV in BSV und wieder zurück verschoben. Es wird von folgendem Szenario ausgegangen: Der Beifahrer und der Fahrer haben jeweils die Sitzheizung eingeschaltet und die Endtemperatur ist erreicht. Es entsteht ein Leistungsdefizit zum Zeitpunkt T1, das vom Energie-Management EM erkannt wird und durch Abschalten einer Sitzheizung ausgeglichen werden kann. Zum Zeitpunkt T2 wird die Sitzheizung 2 abgeschaltet. Dadurch wird die Sitzheizung 2 ihre Priorität in Richtung BSV verändern. Zum Zeitpunkt T3 ist die Sitzheizung 2 soweit abgekühlt, daß der Insasse ein weiteres Abkühlen bemerken würde. Dies hat den Wechsel der Sitzheitung in Klasse BSV zur Folge. Die Sitzheizung 2 besitzt nun eine höhere Priorität als die Sitzheizung 1. Zum Zeitpunkt T4 wird deshalb die Sitzheizung 2 wieder zugeschaltet, während Sitzheizung 1 abgeschaltet wird. Zum Zeitpunkt T5, hat sich die Sitzheizung 2 wieder soweit erwärmt, daß sie wieder in die Klasse SV eingeordnet wird. Die Energieeinsparung bleibt somit unter der Voraussetzung, daß die Energie für eine Heizung mit geringerer Leistung ausreicht, von den Fahrzeuginsassen unbemerkt.

3. Einordnung in Klassen

Die Einordnung der Verbraucher in die jeweilige Klasse kann auf unterschiedliche Art geschehen. Zum einen ist denkbar, daß ein übergeordnetes System aufgrund der von Sensoren oder von einem Beobachter gelieferten Signale, die dem das Energiemanagement durchführenden Steuergerät SG über die Eingänge E1, E2, ...zugeführt werden, den Betriebszustand des betreffenden Verbrauchers erkennt oder schätzt und damit die Änderung der Klasseneinteilung, falls erforderlich, vornimmt. Die Änderung der Klassenzugehörigkeit kann auch nach einer gewissen Ein- oder Abschaltzeit vorgenommen werden. Es ist auch denkbar, daß der Verbraucher eine Intelligenz besitzt und beispielsweise einen Mikroprozessor umfaßt und abhängig von seinem Betriebszustand die Einordnung in die entsprechende Klasse selbst vornimmt.

Mechanische Verbraucher

Die Einordnung beschränkt sich nicht nur auf elektrische Verbraucher, sondern gilt auch für mechanische. Dies erlaubt eine Ausdehnung der Funktionen des Energie-Managements EM. Beispielsweise kann die Einordnung eines mechanischen Klimakompressors (im Normalzustand) in die Klasse SV dazu genutzt werden, in einen Beschleunigungsphase des Kraftfahrzeugs den Kompressor auszuchalten, um mehr Leistung für den Vortrieb zu bekommen. Weiterhin ist denkbar die mechanische Ankopplung des Generators an den Triebstrang zu berücksichtigen, um diesen beim Beschleunigen zu entregen und ihn beim Bremsen gezielt voll zu erregen. Bei Fahrzeugen mit einem Starter-Generator, der direkt mit der Kurbelwelle verbunden ist, lassen sich damit besonders effektive Beschleunigungs- bzw. Bremseffekte erzielen und auch mechanische Energie kann beim Bremsen in elektrische Energie rückgewandelt werden.

Die Priorisierung der Verbraucher kann grundsätzlich fahrzeugspezifisch oder aber auch personenspezifisch, insbesonders unter Berücksichtigung spezieller Komfortwünsche erfolgen. Die Prioritäten für das Schalten von Verbrauchern sind somit nicht für alle Fahrzeuge einer Baureihe gleich, sondern ändern sich personenabhängig, dies gilt auch für das Zu- oder Abschalten von Verbrauchern.

Zusätzlich können Anhaltspunkte zum künftigen Fahrzyklus gegeben oder berücsichtigt werden und damit die Strategie des Energiemanagements optimiert werden. Maßnahmen zur Erhöhung der Leistungserzeugung bzw. Verringerung des Leistungsverbrauchs, die Auswirkungen auf den Kraftstoffverbrauch bzw. die Funktion und/oder den Komfort haben, sind zielgerichtet einsetzbar.

Durch Memory-Funktionen im Bereich Sitzposition, Spiegelverstellumg usw. und/oder andere Funktionen der Fahrererkennung, beispielsweise Zutrittskontrolle, Passive-Entry, Finger-Print usw. ist der Fahrer des Fahrzeugs dem Steuergerät bekannt und es kann darauf reagieren. Mit Hilfe lernender Systeme können das individuelle Fahrverhalten bzw. die individuellen Verbraucheraktivierungen (Komfortwünsche) des jeweiligen Fahrers ermittelt, gespeichert und beim Energie-Management berücksichtigt werden. Zudem ist dem Fahrer oft ein bestimmter, wiederkehrender Fahrzyklus, beispielsweise der tägliche Weg zur Arbeit zuzuordnen.

Durch Berücksichtigung dieser Eigenheiten ist eine Priorisierung der Verbraucher personenspezifisch durchführbar. Ist für einen Fahrer Komfort wichtig, erkennbar aus den im Normalfall von ihm eingeschalteten Komfortverbraucher, ist die Priorität der Komfortverbraucher gegenüber dem Durchschnitt zu erhöhen. Eine Reduzierung des Komforts durch Abschaltung komfortrelevanter Verbraucher zur Verbesserung einer kritischen Ladebilanz ist in diesem Fall, wenn möglich zu vermeiden. Es sind dann andere Maßnahmen zur Verbesserung der Ladebilanz zu ergreifen, beispielsweise ist eine Anpassung des Drehzahlniveaus für eine optimale elektrische Leistungserzeugung vorzuziehen. Bei einem Fahrer, der weniger Wert auf Komfort, jedoch mehr Wert auf eine verbrauchsgünstige Fahrweise legt, sind dagegen eher Komfortverbraucher abzuschalten. Auf eine Änderung (Erhöhung) des Drehzahlniveaus mit der Folge einer Erhöhung des Kraftstoffverbrauchs ist dagegen nach Möglichkeit zu verzichten.

Ist nach einer längerfristigen Beobachtung bzw. Lernphase ein bestimmter Fahrzyklus und damit das Drehzahlniveau einer Person zuordenbar, sind die Grenzen des Eingriffs zur Verbesserung der Ladebilanz besser abschätzbar. Das heißt, wird ein kritischer Ladezustand erkannt, ist aber mit einer gewissen statistischen Sicherheit in naher Zukunft ein für die elektrische Leistungserzeugung günstiger Fahrzyklus absehbar, sind keine Maßnahmen zur Anhebung der Ladebilanz einzuleiten. Diese Maßnahmen sind stets mit erhöhtem Kraftstoffverbrauch und/oder mit einem Verlust an Funktionalität/Komfort verbunden und daher nach Möglichkeit zu vermeiden. Dies gilt allerdings nicht, wenn ein Zusammenbrechen der elektrischen Versorgung unmittelbar bevorsteht, dann sind Maßnahmen zu treffen, die dies verhindern.

Insgesamt handelt es sich bei den beschriebenen Ausführungsformen um Verfahren, das die Prioritäten der Verbraucher in Abhängigkeit von deren Zustand verändert. Das Schalten der Verbraucher hängt von deren Priorität ab. die Prioritäten der Verbraucher werden softwaremäßig festgelegt, nach der Beziehung:

$$Schaltzustand = f(Priorität)$$

$$Priorität = f(Zustand \ des \ Verbrauchers).$$

Das Schalten erfolgt nicht klassenweise, sondern so, daß einzelne Verbraucher einer Klasse geschaltet werden. Das Schalten erfolgt entweder sukzessive, in Anpassung an den Ladezustand oder parallel, wenn zum Ausgleich mehrere Verbraucher geschaltet werden müssen oder wenn notwendig, die ganze Klasse. Dabei werden immer zuerst die Verbraucher mit der niedrigsten Priorität geschaltet und erst wenn alle Verbraucher mit der niedrigsten Priorität geschaltet sind, werden Verbraucher mit der nächst höheren Priorität (ab)geschaltet.

Tabelle 1: **Eingruppierung der Verbraucher in Prioritätsklassen (Beispiel)**

| NVS | BSV | SV |
|---|---|---|
| • Fahrlicht | • Heizgebläse | • Sitzheizung |
| • Motorsteuerung | • Radio | • Heckscheibenheizung |
| • Kraftstoffpumpe | • Sitzverstellung | • el. Zusatzheizung |
| • usw | • Frontscheibenheizung | • Zigarettenanzünder |
| | • usw | • usw |

Die Eingruppierung der dargestellten Prioritäten bezieht sich auf den Normalzustand

EP 1 054 789 B1

Tabelle 2: **Beispiel für Wechsel der Prioritätenzugehörigkeit**

| Zeit | Aktion | BSV | SV |
|---|---|---|---|
| T1 | (EM erkennt Leistungsdefizit) | | Sitzheizung1 (eingeschaltet) Sitzheizung2 (eingeschaltet) |
| T2 | (EM schaltet Sitzheizung 2 ab) | ← | Sitzheizung1 (eingeschaltet) Sitzheizung2 (ausgeschaltet) |
| T3 | (Heizung 2 wechselt Priorität) | Sitzheizung 2 (ausgeschaltet) | Sitzheizung1 (eingeschaltet) |
| T4 | (EM schaltet Heizung 2 ein u. Heizung 1 ab) | Sitzheizung2 (eingeschaltet) | Sitzheizung1 (ausgeschaltet) → |
| T5 | (Priorität von Heizung 2 fällt zurück) | ← | Sitzheizung1 (ausgeschaltet) Sitzheizung2 (eingeschaltet) |

EP 1 054 789 B1

# EP 1 054 789 B1

**Patentansprüche**

1.  Verfahren zum Schalten von Verbrauchern, mittels Schaltelementen, die von einer Steuereinrichtung so ansteuerbar sind, dass die Verbraucher unter Berücksichtigung von Schaltprioritäten zu- oder abgeschaltet werden, wobei die Zu- oder Abschaltung bei Erreichen bestimmter Bedingungen erfolgt, wobei die den einzelnen Verbrauchern zugeordneten Schaltprioritäten während des Betriebes dynamisch veränderbar sind, wobei eine Umschaltung der Schaltpriorität zur Erfüllung vorgebbarer Betriebszustände erfolgt, **dadurch gekennzeichnet, daß** die Prioritäten so angepaßt werden, daß die Wahrnehmbarkeit der Umschaltung des Betriebszustände minimiert wird.

2.  Verfahren zum Schalten von Verbrauchern nach Anspruch 1, **dadurch gekennzeichnet, dass** die den Verbrauchern zugeordneten Schaltprioritäten abhängig vom Betriebszustand der Verbraucher verändert werden.

3.  Verfahren zum Schalten von Verbrauchern nach Anspruch 1 oder 2, **dadurch gekennzeichnet, dass** die Verbraucher in Klassen mit unterschiedlichen Prioritäten eingeteilt werden, wobei die Eingruppierung bezogen auf den Normalzustand erfolgt.

4.  Verfahren zum Schalten von Verbrauchern nach Anspruch 1, 2 oder 3, **dadurch gekennzeichnet, dass** eine Zu- oder Abschaltung der Verbraucher prioritätsabhängig erfolgt und die Verbraucher mit der aktuell jeweils niedrigsten Priorität zuerst abgeschaltet und zuletzt wieder zugeschaltet werden.

5.  Verfahren zum Schalten von Verbrauchern nach Anspruch 1, 2, 3 oder 4, **dadurch gekennzeichnet, daß** es von einem Steuergerät (SG) eines Fahrzeugs durchgeführt wird und die Verbraucher elektrische und gegebenenfalls auch mechanische Verbraucher sind, deren Schaltpriorität vom Steuergerät entsprechend vorgebbarer Bedingungen verändert wird.

6.  Verfahren zum Schalten von Verbrauchern nach Anspruch 5, **dadurch gekennzeichnet, daß** die Verbraucher in die Prioritätsklassen "Nicht-Schaltbare-Verbraucher" (NSV), "Bedingt-Schaltbare-Verbraucher" (BSV) und "Schaltbare-Verbraucher" (SV) unterteilt sind, mit unterschiedlichen Schaltprioritäten,wobei die Priorität gemäß der aufgezählten Reihenfolge abnimmt.

7.  Verfahren zum Schalten von Verbrauchern nach Anspruch 5 oder 6, **dadurch gekennzeichnet, daß** bei der Wahl der Prioritäten der Verbraucher Belange des Bordnetzes und/oder Belange des Antriebes des Kraftfahrzeuges berücksichtigt werden.

8.  Verfahren zum Schalten von Verbrauchern nach Anspruch 5 oder 6, **dadurch gekennzeichnet, daß** bei der Wahl der Prioritäten der Verbraucher Belange des Fahrers berücksichtigt werden, so daß eine fahrerabhängige Zu- oder Abschaltung der Verbraucher erfolgt.

9.  Verfahren zum Schalten von Verbrauchern nach Anspruch 8, **dadurch gekennzeichnet, daß** der Fahrer vom Steuergerät (SG) durch Auswertung vorgebbarer, den Fahrer charakterisierende Bedingungen erkannt wird.

10. Verfahren zum Schalten von Verbrauchern nach Anspruch 7 oder 8, **dadurch gekennzeichnet, daß** vorgebbare Eigenschaften und Wünsche oder Gewohnheiten des Fahrers und/oder typische Fahrstrecken vom Steuergerät (SG) erkannt und abgespeichert werden und bei der Festlegung der Schaltprioritäten mitberücksichtigt werden.

11. Verfahren zum Schalten von Verbrauchern nach einem der vorhergehenden Ansprüche, **dadurch gekennzeichnet, daß** bei einer Sitzheizung die Schaltprioritäten so angepaßt werden, daß die zeitweilige Abschaltung nicht wahrgenommen wird.

**Claims**

1.  Method for switching loads by means of switching elements which can be actuated by a control device in such a way that the loads are connected into the circuit or disconnected from it taking into account switching priorities, the connection into the circuit or disconnection from it taking place when certain conditions are fulfilled, the switching priorities which are assigned to the individual loads being dynamically variable during operation, and the switching priority being switched over in order to fulfil predefinable operating conditions, **characterized in that** the priorities are adapted in such a way that the possibility of perceiving the switching over of the operating states is minimized.

8

**2.** Method for switching loads according to Claim 1, **characterized in that** the switching priorities which are assigned to the load are varied as a function of the operating state of the loads.

**3.** Method for switching loads according to Claim 1 or 2, **characterized in that** the loads are divided into classes with different priorities, the classification being carried out with respect to the normal state.

**4.** Method for switching loads according to Claim 1, 2 or 3, **characterized in that** the loads are connected into the circuit or disconnected from it as a function of priority, and the loads with the respectively lowest priority at a given time are disconnected from the circuit first and connected to it again last.

**5.** Method for switching loads according to Claim 1, 2, 3 or 4, **characterized in that** it is carried out by a control unit (SG) of a vehicle, and the loads are electrical and possibly also mechanical loads whose switching priority is varied by the control unit in accordance with predefinable conditions.

**6.** Method for switching loads according to Claim 5, **characterized in that** the loads are divided into the "non-switchable loads" (NSL), "conditionally switchable loads" (CSL) and "switchable loads" (SL) priority classes, with different switching priorities, the priority decreasing in accordance with the enumerated sequence.

**7.** Method for switching loads according to Claim 5 or 6, **characterized in that** conditions of the on-board power system and/or conditions of the driver of the motor vehicle are taken into account in the selection of the priorities of the loads.

**8.** Method for switching loads according to Claim 5 or 6, **characterized in that** conditions of the driver are taken into account in the selection of the priorities of the loads so that the loads are connected into the circuit or disconnected from it as a function of the driver.

**9.** Method for switching loads according to Claim 8, **characterized in that** the driver is recognized by the control unit (SG) through the evaluation of predefinable conditions which characterize the driver.

**10.** Method for switching loads according to Claim 7 or 8, **characterized in that** predefinable properties and requests or habits of the driver and/or typical routes are recognized by the control unit (SG) and stored and also taken into account in the definition of the switching priorities.

**11.** Method for switching loads according to one of the preceding claims, **characterized in that** when a seat is being heated the switching priorities are adapted in such a way that the temporary disconnection from the circuit is not performed.

**Revendications**

**1.** Procédé de commutation de consommateurs au moyen d'éléments de commutation commandables par un dispositif de commande, de manière à connecter ou à déconnecter les consommateurs compte tenu de priorités de commutation, la connexion ou la déconnexion intervenant lorsque certaines conditions sont atteintes, les priorités de commutation affectées aux différents consommateurs pouvant être modifiées de façon dynamique pendant le fonctionnement, une commutation inverse de la priorité de commutation intervenant pour satisfaire des états de fonctionnement prédéterminables,
**caractérisé en ce que**
les priorités sont adaptées de manière à ce que la perceptibilité de la commutation inverse des états de fonctionnement soit réduite.

**2.** Procédé de commutation de consommateurs selon la revendication 1,
**caractérisé en ce que**
les priorités de commutation affectées aux consommateurs sont modifiées en fonction de l'état de fonctionnement des consommateurs.

**3.** Procédé de commutation de consommateurs selon la revendication 1 ou 2,
**caractérisé en ce que**
les consommateurs sont répartis dans des classes ayant des priorités différentes, le rangement se déroulant par rapport à l'état normal.

**4.** Procédé de commutation de consommateurs selon la revendication 1, 2 ou 3,
**caractérisé en ce qu'**
une connexion ou une déconnexion des consommateurs intervient en fonction de la priorité et les consommateurs ayant la priorité du moment la plus faible sont déconnectés les premiers et reconnectés les derniers.

**5.** Procédé de commutation de consommateurs selon la revendication 1, 2, 3 ou 4,
**caractérisé en ce qu'**
il est exécuté par un appareil de commande (AC) d'un véhicule et les consommateurs sont des consommateurs électriques et, le cas échéant aussi, mécaniques dont la priorité de commutation est modifiée par l'appareil de commande selon des conditions prédéterminables.

**6.** Procédé de commutation de consommateurs selon la revendication 5,
**caractérisé en ce que**
les consommateurs sont divisés en classes de priorité "Consommateurs non commutables" (CNC), "Consommateurs commutables sous conditions" (CCC) et "Consommateurs commutables" (CC), avec des priorités de commutation différentes, la priorité diminuant selon l'ordre indiqué.

**7.** Procédé de commutation de consommateurs selon la revendication 5 ou 6,
**caractérisé en ce que**
lors du choix des priorités des consommateurs, des intérêts du réseau de bord et/ou des intérêts de la transmission du véhicule à moteur sont pris en compte.

**8.** Procédé de commutation de consommateurs selon la revendication 5 ou 6,
**caractérisé en ce que**
lors du choix des propriétés des consommateurs, des intérêts du conducteur sont pris en compte de manière à ce qu'une connexion ou une déconnexion des consommateurs intervienne en fonction du conducteur.

**9.** Procédé de commutation de consommateurs selon la revendication 8,
**caractérisé en ce que**
le conducteur est reconnu par l'appareil de commande (AC) par analyse de conditions prédéterminables caractérisant le conducteur.

**10.** Procédé de commutation de consommateurs selon la revendication 7 ou 8,
**caractérisé en ce que**
des propriétés et souhaits ou habitudes prédéterminables du conducteur et/ou des trajets typiques sont reconnus par l'appareil de commande (AC) et mémorisés et pris également en compte lors de la définition des priorités de commutation.

**11.** Procédé de commutation de consommateurs selon l'une quelconque des revendications précédentes,
**caractérisé en ce que**
lors du chauffage de siège, les priorités de commutation sont adaptées de manière à ne pas percevoir la déconnexion provisoire.

Fig